# EUROPEAN PATENT APPLICATION

(11) **EP 3 843 339 A1**
(43) Date of publication of application: **30.06.2021**
(21) Application number: 19219470.2
(22) Date of filing: 23.12.2019
(51) Int. Cl.: H04L 12/28

(54) **METHOD FOR DATA EXCHANGE BETWEEN A CABLE MODEM AND A SERVICE**

(71) Applicant: Teuto Valley Technologies GmbH, 64295 Darmstadt (DE)
(72) Inventor: Hintner, Ralf Olaf, 64372 Ober-Ramstadt (DE)
(74) Representative: Bauer, Dirk

(57) **Abstract**

The invention refers to a method for data exchange between a cable modem (6), and a service, wherein the cable modem (6) is in a branched network (8), with a headend having a Cable Modem Termination System (CMTS, 10), a peer device (16) provides the service in a peer network, that has a peer router, the CMTS (10) is connected to the peer router, and a server authenticates the cable modem (6) by its hardware address, provisions and configures it, and routes the data between the cable modem (6), and the service.

For providing centrally managed WAN connections to cloud services, the invention proposes that the server is outside the cable network (2).

## Description

The invention relates to a method for data exchange between a cable modem and a service, wherein the cable modem is in a branched network, with a headend having a Cable Modem Termination System (CMTS), a peer device provides the service in a peer network, that has a peer router, the CMTS is connected to the peer router, and a server authenticates the cable modem by its hardware address, provisions and configures it, and routes the data between the cable modem, and the service.

Connecting devices like TVs, telephones, and universal computers, from inside a cable network, to a vast range of peers in packet-switched networks, in particular the world-wide internet is commonly known. After newly connecting, the CMTS at the headend of the cable network authenticates such cable modem by its MAC address which cannot be changed or overwritten, and automatically provisions and configures it. The CMTS then routes data between the cable modem inside the network, and the outside world, in particular the respective selected peer devices.

In the background of the invention, network management using software-defined networking (SDN) technology enables dynamic, programmatically efficient network configuration and improves network performance and monitoring similar to cloud computing. In particular, the routing process intelligence (control plane) is disassociated from forwarding of network packets (data plane), and incorporated in one or more controllers which are considered the brain of the SDN network.

### Problem

The invention aims at providing centrally managed WAN connections to cloud services.

### Solution

Referring to the above mentioned state of the art, the invention proposes that the server is outside the cable network. The invention disassociates the routing for cable modems, from the forwarding process of network packets by the CMTS, according to SDN, and makes the server the brain of the network.

Preferably, in a method according to the invention, the server provides the cable modem with a cryptic key for hardware layer security, and encrypts and decrypts the data for the service, with the key.

To prevent cable modems in the cable network from listening to each other, the Data Over Cable Service Interface Specification (DOCSIS) includes hardware layer security services in its Baseline Privacy Interface (BPI), and Security (SEC) specifications: The CMTS provides (and periodically refreshes) unique cryptic keys to each cable modem, and encrypts data received from the outside world for the cable modems, and decrypts data received from the cable modems for the outside world, with the same. The cable modems have built-in facilities for encoding data before forwarding into the cable network, and decoding data received from the cable network, with the respective keys. The term "hardware layer" refers in particular to the medium access control (MAC) sublayer of the physical layer of the OSI model, according to IEEE 802 LAN standards, that controls the hardware responsible for interaction with the wired, optical or wireless transmission medium.

For data exchange outside the cable network, or for hiding contents from the CMTS, the cable modems can rely on any security mechanism commonly known from the internet, e.g. tunneling, or transport layer security.

The CMTS thus does not know the key, and cannot decrypt the data received from the cable modem. The contents are thus hidden from the CMTS.

Preferably, in a method according to the invention, the cable modem routes the data between the network and a smart TV, or between the network and a set-top box, wherein a TV is connected to the set-top box. Smart TV's, and set-top boxes with TV's are commonly connected to cable networks, for media streaming use cases.

Preferably, in a method according to the invention, the cable modem routes the data between the network and a universal computer. Universal computers are commonly connected to cable networks, for data exchange use cases.

Preferably, in a method according to the invention, the service is a streaming service, and/or provides access to a storage device, and/or to a database. Commonly known database applications to be hosted by the peer, are in particular DMS, CRM, and ERP.

Preferably, in a method according to the invention, the cable modem routes the data between the network and a telephone, and the service is an automatic telephone exchange service, connecting to another telephone. Telephones are commonly connected to cable networks, for telephony use cases. In particular, the telephone exchange service may range in technology from telephone system (KTS) to private branch exchange (PBX), or public switched telephone network (PSTN).

Preferably, in a method according to the invention, the CMTS is connected to the peer router, over a dedicated direct cable link. In such method according to the invention, the cable link (wire, or fibre) is reserved for the connection to the server, only. The connection is thus physically isolated from the world outside, and provides for maximum privacy, and security.

Preferably, in such method, the CMTS is connected to the cable link, over a cable network backbone. Commonly known cable networks have a multitude of CMTS, and subsequent branched networks, bound together at one common backbone with one (or more) common interface(s) to the outside world.

Preferably, in a method according to the invention, data exchange between the server and the service is cryptographically secured. In such method, privacy of data exchange between the server, and the service is guaranteed.

Preferably, in a method according to the invention, the server is in the peer network. In such method, the peer network may define security measures for data exchange between the server, and the service.

Preferably, in such method, the service is hosted by the server. In such method, the server may define security measures for data exchange with the service.

Preferably, in a method according to the invention, the server provides traffic filtering, and/or bandwidth management, for the cable modem. Traffic filtering, and bandwidth management are easily managed, by the server.

### Use cases

The invention is explained in some use cases. Shown are schematic views of use cases for
- fig. 1: Media Streaming,
- fig. 2: Data Connection, and
- fig. 3: Telephony.

In the below use cases according to the invention, hardware is grouped in three boxes representing consumer premises 1, a cable network 2, and a cloud 3.

In consumer premises 1, consumer devices 4 are connected to a local network 5 provided by a cable modem 6. The cable network 2 has a backbone 7, and a multitude of branched networks 8, whereof only one, namely a Hybrid Fiber Coax (HFC) network, and only one branch 9 of the same is shown in the respective figures. The cable modem 6 connects the local network 5, to the branch 9.

A cable modem termination system (CMTS) 10 connects the network 8 to the backbone 7. A cable network edge switch 11 connects the backbone 7 to a dedicated direct cable link 12, here: a high-speed direct fiber link. The cloud 3 has a connection frontend server (CFS) 13, an edge server 14, a cloud gateway 15, and a peer device 16. The server is administered via an integrated GUI (not shown). An edge router 17 connects the cloud 3 to the cable link 12. The server, edge server 14, cloud gateway 15, and peer device 16 are implemented as virtual machines on one single hardware device.

To become part of a software defined network (SDN), the cable modem 6 must be onboarded by a privileged user of the CFS 13. Device IDs are stored in the CFS 13 database, as well as all device specific settings: In the CMTS 10, the CFS 13 is configured as provisioning server, for the cable modem 6. In the CFS 13, a hardware specific identifier (the "MAC address" according to IEEE 802) of the CMTS 10 is stored, to which the cable modem 6 is connected. Service profiles and bandwidth budgets are stored in the database as well. At any time, the cable modem 6 can temporarily be blocked, or be removed from the SDN.

During initial configuration, the CFS 13 authenticates the cable modem 6 by its unique and burnt in MAC address, and assigns to the cable modem 6 a cryptic key according to the key management protocol (Baseline Privacy Key Management, BPKM) and security association of the DOCSIS specification.

The CMTS 10 forwards the following DHCP discover, and any subsequent network traffic from the cable modem 6, to the CFS 13, which then controls all DHCP parameters (static IP address, as well subnet mask and gateway, and address of TFTP- and DNS-servers) of the cable modem 6. After initial configuration, the CFS 13 identifies the cable modem 6 by the IP address.

Activated services, network access, service flows, bandwidth and other parameters of the cable modem 6 are further configured by a config file provided on the TFTP-server, by the CFS 13. The CFS 13 thus obtains full control, over the cable modem 6.

Data exchange according to the invention is divided into two separate security zones, between the cable modem 6, and the CMTS 10 on the one hand, and between the CMTS 10, and the CFS 13 on the other.

Data is sent from the cable modem 6, via the CMTS 10, the backbone 7, and the cable link 12, and received at the CFS 13. At the CFS 13, the data first passes a filter that verifies that it belongs to the software defined network (SDN), and has valid credentials. Where applicable, traffic budget is checked. The filter then sends the data to a service router, which identifies the requested service (e.g. https, sip, scp). If session offloading for the particular cable modem 6, and the requested service is configured inside the CFS 13 database, the data will be forwarded to a proxy, elsewise to a forwarder.

The forwarder sends requested payload to shaping without any further processing. Bandwidth limitation or reservation will be done by shaping. Depending on particular service, downscaling can be done. Proxy terminates the required service, checks credentials and establishes via shaping a new session by using a set of rules for the services, and the cable modem 6, from the database.

Bandwidth allocation of the cable link 12 will be permanently monitored. Overload situations are prevented by the filter. Billing data is aggregated on all relevant instances, and populated by the CFS 13, to external systems via standard interfaces (e.g. REST). An integrated intrusion detection system (IDS) scans network traffic for anomalies which will be escalated to network monitoring instances.

Consumer premises 1 can only communicate with the cloud 3, with no public network in between. The CFS 13 provides real time traffic and network statistics plus endpoint identification, being the source for error analysis. IPv4 and IPv6 address schemes are supported.

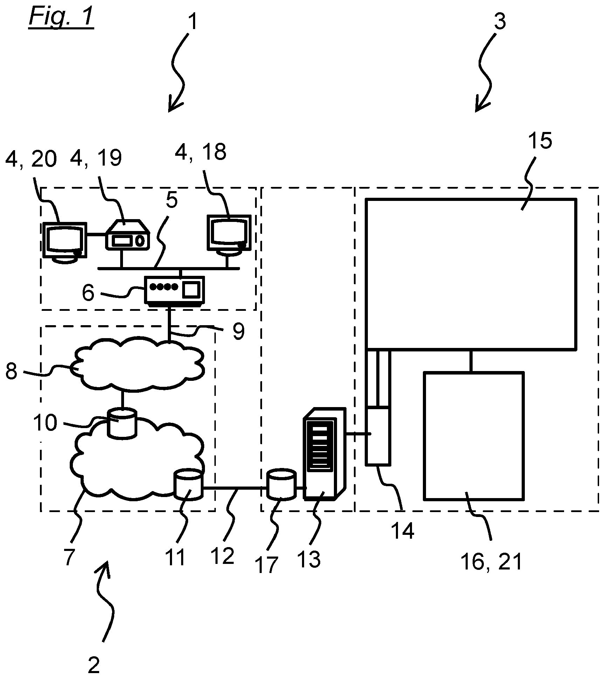

In the first use case "Media Streaming" according to the invention as shown in figure 1, the consumer devices 4 are a smart TV 18, and a set-top box 19 with a legacy TV 20, the peer device 16 is a streaming server 21, e.g. Apple TV. The smart TV 18, and the legacy TV 20 are switched on, connect to the streaming server 21, and using streaming services supplied by the streaming server 21. Time critical, big packets are provided from the media streaming server 21 to the TV 20, and to the smart TV 18. Unicast and Multicast are supported by the procedure.

The CFS 13 executes digital rights management as well as preventive fraud detection, and has escalation features in case of abuse. DDOS attacks to block the service are refused by the CFS 13.

The CFS 13 implements centralized traffic shaping, no configurations on customer premises is required. This feature reserves the required bandwidth for high quality voice calls. Capacity issues on the interconnection between the CFS 13 and the cloud frontend server are detected and signaled by the CFS 13. The signal can be used by the streaming server 21 operator to reduce the quality of the content (e.g. 4k instead of 8k) to reduce bandwidth requirements and dropouts on the customer side. A billing interface is integrated in the CFS 13 for data workload billing on a per-service base.

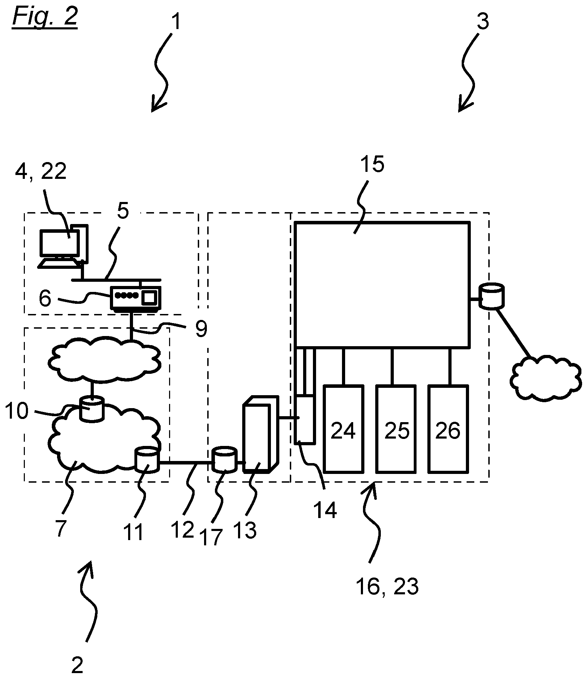

In the second use case "Data Connect" according to the invention as shown in figure 2, the consumer device 4 is a universal computer (PC) 22, the peer device 16 is a database server 23 hosting a document management system (DMS) 24, a content rights management (CRM) system 25, and an enterprise resource planning (ERP) system 26. The cloud gateway 15 further provides access to the internet.

The PC 22 uses the DMS 24, or internet access. A bidirectional channel is established and used for data going to or coming from the PC 22. Billing information is collected, and forwarded to the CRM 25 via a billing interface.

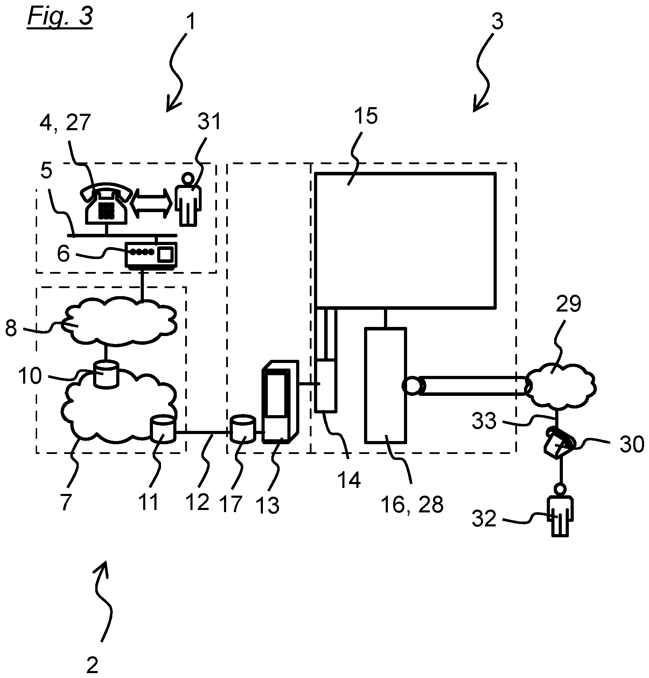

In the third use case "Telephony" according to the invention as shown in figure 3, the consumer device 4 is an SIP telephone 27, the peer device 16 is a private branch exchange (PBX) service 28 connected to the worldwide public switched telephone network (PSTN) 29, and to the telephones 30 therein, whereof only one is shown, as an example.

The SIP telephone 27 has credentials for the PBX 28, a customer 31 initiates a call to a remote user 32 who is connected via a POTS connection 33.

In other use cases according to the invention, the devices in the cloud 3 are implemented on a hosted server, a load sharing cluster, a server cluster in a datacenter, or in separate hardware, each.

In the figures are
- 1: consumer premises
- 2: cable network
- 3: cloud
- 4: consumer device
- 5: local network
- 6: cable modem
- 7: backbone
- 8: branched network
- 9: branch
- 10: cable modem termination system (CMTS)
- 11: edge switch
- 12: cable link
- 13: connection frontend server (CFS)
- 14: edge server
- 15: cloud gateway
- 16: peer device
- 17: edge router
- 18: smart TV
- 19: set-top box
- 20: TV
- 21: streaming server
- 22: universal computer (PC)
- 23: database server
- 24: document management system (DMS)
- 25: content rights management (CRM) system
- 26: enterprise resource planning (ERP) system
- 27: SIP telephone
- 28: private branch exchange (PBX) service
- 29: public switched telephone network (PSTN)
- 30: telephone
- 31: customer
- 32: remote user
- 33: POTS connection

## Claims

1. Method for data exchange between a cable modem (6), and a service,
wherein
a. the cable modem (6) having a hardware address is in a branched network (8), with a headend having a Cable Modem Termination System (CMTS, 10),
b. a peer device (16) provides the service in a peer network, that has a peer router,
c. the CMTS (10) is connected to the peer router, and
d. a server authenticates the cable modem (6) by its hardware address, provisions and configures it, and routes the data between the cable modem (6), and the service,
***characterized in that*** the server is outside the cable network (2).

2. Method according to the preceding claim, ***characterized in that*** the server provides the cable modem (6) with a cryptic key for hardware layer security, and encrypts and decrypts the data for the service, with the key

3. Method according to one of the preceding claims, ***characterized in that*** the cable modem (6) routes the data between the network (8) and a smart TV (18), or between the network (8) and a set-top box (19), wherein a TV (20) is connected to the set-top box (19).

4. Method according to one of the preceding claims, ***characterized in that*** the cable modem (6) routes the data between the network (8) and a universal computer (22).

5. Method according to the preceding claim, ***characterized in that*** the service is a streaming service, and/or provides access to a storage device, and/or to a database.

6. Method according to one of the preceding claims, ***characterized in that*** the cable modem (6) routes the data between the network (8) and a telephone, and the service is an automatic telephone exchange service, connecting to another telephone.

7. Method according to one of the preceding claims, ***characterized in that*** the CMTS (10) is connected to the peer router, over a dedicated direct cable link (12).

8. Method according to the preceding claim, ***characterized in that*** the CMTS (10) is connected to the cable link (12), over a cable network backbone (7).

9. Method according to one of the preceding claims, ***characterized in that*** data exchange between the server, and the service is cryptographically secured.

10. Method according to one of the preceding claims, ***characterized in that*** the server is in the peer network.

11. Method according to the preceding claim, ***characterized in that*** the service is hosted by the server.

12. Method according to one of the preceding claims, ***characterized in that*** the server provides traffic filtering, and/or bandwidth management, for the cable modem (6).
